# EUROPÄISCHE PATENTANMELDUNG

(11) **EP 3 919 205 A1**
(43) Veröffentlichungstag der Anmeldung: **08.12.2021**
(21) Anmeldenummer: 20178337.0
(22) Anmeldetag: 04.06.2020
(51) Int. Cl.: B22F 3/105, B29C 64/153, B29C 64/35, B29C 64/393, B33Y 40/20, B33Y 50/02

(54) **VERFAHREN UND ANORDNUNG ZUM SEPARIEREN ÜBERSCHÜSSIGEN WERKSTOFFS VON EINEM ADDITIV HERGESTELLTEN BAUTEIL**

(71) Anmelder: Siemens Aktiengesellschaft, 80333 München (DE)
(72) Erfinder: Paffrath, Meinhard, 85622 Feldkirchen (DE)

(57) **Zusammenfassung**

Zum Separieren überschüssigen Werkstoffs (WS) von einem additiv hergestellten Bauteil (BT), werden räumlich aufgelöste Strukturdaten (CAD) des Bauteils (BT) empfangen. Anhand der Strukturdaten (CAD) wird ein Hohlraum (H) des Bauteils (BT) durch ein virtuelles räumliches Gitter (G) in Gitterzellen (GZ) eingeteilt, wobei eine räumliche Ausrichtung des Gitters (G) relativ zum Bauteil (BT) durch eine Ausrichtungsangabe (RA) spezifiziert wird. Anhand der Ausrichtungsangabe (RA) wird ein diskretes Raster (R) von räumlichen Orientierungen des Bauteils (BT) ermittelt. Weiterhin werden die Gitterzellen (GZ) des Hohlraums (H) simulativ mit virtuellem Werkstoff (VWP) gefüllt. Anhand der Strukturdaten (CAD) wird dann ein Ausschüttvorgang des virtuellen Werkstoffs (VWP) aus dem Bauteil (BT) für auf das diskrete Raster (R) beschränkte räumliche Orientierungen simuliert, wobei eine zeitliche Abfolge von auf das diskrete Raster (R) beschränkten Orientierungen (AP(1),...,AP(N)) ermittelt wird. Abhängig vom simulierten Ausschüttvorgang wird das Bauteil (BT) dann sukzessive in die Orientierungen (AP(1),...,AP(N)) der zeitlichen Abfolge rotiert.

## Beschreibung

In zeitgemäßen Produktionsprozessen gewinnt die additive Fertigung zunehmend an Bedeutung. Sie erlaubt es, Produkte mit nahezu beliebig komplexen Umrissen und Topologien mit verhältnismäßig geringem Aufwand zu produzieren. Verglichen mit klassischen Fertigungsverfahren sind bei der additiven Fertigung nur wenige konstruktive Nebenbedingungen einzuhalten.

Eine bekannte additive Fertigungstechnologie ist das sogenannte Pulverbettverfahren, das insbesondere bei der Herstellung von metallischen Bauteilen Anwendung findet. Hierbei wird der Werkstoff für das herzustellende Bauteil in Form eines Pulverbetts, Fluidbetts bzw. Werkstoffbetts schichtweise bereitgestellt. Zur Herstellung des Bauteils werden dann die einzelnen Partikel des Werkstoffs Schicht für Schicht miteinander verbunden. Der Werkstoff kann hierbei ein Metall, ein Polymerpulver, ein anorganisches Material oder ein anderes pulverförmiges oder flüssiges Material sein. Die Verbindung der Werkstoffpartikel kann durch physikalische oder chemische Prozesse, durch Sintern, Verkleben, Aufschmelzen, Erstarren oder andere Verbindungsverfahren bewirkt werden. Bekannte Verfahren sind Laserschmelzen und Lasersintern sowie die Anwendung von UV-Strahlung zur Aushärtung flüssiger Werkstoffe.

Der nicht verbundene, d.h. überschüssige Werkstoff dient während des Fertigungsprozesses als eine passive Stützstruktur, so dass beispielsweise überhängende Geometrien realisiert werden können. Ähnliches gilt auch für Fluide oder fluidisierbare Materialien, wie z.B. durch UV-Strahlen aushärtbare Monomere. Nach Beendigung des Fertigungsprozesses füllt der nicht verbundene Werkstoff häufig das Bauteil komplett oder zumindest teilweise aus und muss nach Entnahme des Bauteils aus dem Werkstoffbett aus den Hohlräumen des finalen Bauteils entfernt werden.

Bisher erfolgt die Entfernung des überschüssigen Werkstoffs manuell oder durch maschinelles Rotieren oder Schütteln des Bauteils. Eine solche Vorgehensweise kann jedoch - insbesondere, wenn das Bauteil Hohlräume mit komplexer Geometrie aufweist - sehr langwierig sein.

Aus dem Dokument EP 3527304 A1 ist ein Verfahren bekannt, bei dem ein Ausschütten des überschüssigen Werkstücks simuliert wird und abhängig davon eine optimierte Entleerung ausgeführt wird. Eine hinreichend genaue Simulation des Ausschüttvorgangs erfordert allerdings einen sehr hohen Rechenaufwand.

Es ist Aufgabe der vorliegenden Erfindung, ein Verfahren und eine Anordnung zu schaffen, die eine effiziente Separierung überschüssigen Werkstoffs von einem additiv hergestellten Bauteil erlauben.

Gelöst wird diese Aufgabe durch ein Verfahren mit den Merkmalen des Patentanspruchs 1, durch eine Anordnung mit den Merkmalen des Patentanspruchs 10, durch ein Computerprogrammprodukt mit den Merkmalen des Patenanspruchs 11 sowie durch ein computerlesbares Speichermedium mit den Merkmalen des Patenanspruchs 12.

Zum Separieren überschüssigen Werkstoffs von einem additiv hergestellten Bauteil, werden räumlich aufgelöste Strukturdaten des Bauteils empfangen. Anhand der Strukturdaten wird ein Hohlraum des Bauteils durch ein virtuelles räumliches Gitter in Gitterzellen eingeteilt, wobei eine räumliche Ausrichtung des Gitters relativ zum Bauteil durch eine Ausrichtungsangabe spezifiziert wird. Anhand der Ausrichtungsangabe wird ein diskretes Raster von räumlichen Orientierungen des Bauteils ermittelt. Weiterhin werden die Gitterzellen des Hohlraums simulativ mit virtuellem Werkstoff gefüllt. Anhand der Strukturdaten wird dann ein Ausschüttvorgang des virtuellen Werkstoffs aus dem Bauteil für auf das diskrete Raster beschränkte räumliche Orientierungen simuliert, wobei eine zeitliche Abfolge von auf das diskrete Raster beschränkten Orientierungen ermittelt wird. Abhängig vom simulierten Ausschüttvorgang wird das Bauteil dann sukzessive in die Orientierungen der zeitlichen Abfolge rotiert.

Zum Ausführen des erfindungsgemäßen Verfahrens sind eine Anordnung zum Separieren eines Werkstoffs von einem additiv hergestellten Bauteil, ein Computerprogrammprodukt sowie ein computerlesbares, vorzugsweise nichtflüchtiges Speichermedium vorgesehen.

Das erfindungsgemäße Verfahren sowie die erfindungsgemäße Anordnung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Ein Vorteil der Erfindung ist insbesondere darin zu sehen, dass durch die Beschränkung auf ein diskretes Raster von räumlichen Orientierungen ein für die Simulation erforderlicher Rechenaufwand in der Regel erheblich reduziert werden kann. Insofern auch die reale Bewegung des Bauteils auf das diskrete Raster beschränkt wird, sind die Simulationsergebnisse in den meisten Fällen auch hinreichend genau. Darüber hinaus kann durch die Simulation des Ausschüttvorgangs und eine darauf basierende Bewegung des Bauteils in vorteilhafte Ausschüttposen der überschüssige Werkstoff in der Regel sehr effektiv vom Bauteil separiert werden.

Vorteilhafte Ausführungsformen und Weiterbildungen der Erfindung sind in den abhängigen Ansprüchen angegeben.

Nach einer vorteilhaften Ausführungsform der Erfindung kann ein jeweiliger Bewegungsschritt der Simulation auf diskrete Bewegungen des virtuellen Werkstoffs von einer jeweiligen Gitterzelle in eine dieser benachbarte Gitterzelle beschränkt werden. Dabei können die diskreten Bewegungen des virtuellen Werkstoffs durch Bewegungen von virtuellen Werkstoffpartikeln von einer jeweiligen Gitterzelle in eine jeweils benachbarte Gitterzelle simuliert werden. Insbesondere können Bewegungen innerhalb einer Gitterzelle und/oder kontinuierliche Bewegungen des virtuellen Werkstoffs ausgeschlossen werden.

Entsprechend kann eine Bewegungsrichtung des virtuellen Werkstoffs in der Simulation auf von einer jeweiligen Gitterzelle in eine dieser benachbarte Gitterzelle führende Richtungen beschränkt werden.

Insbesondere kann die Simulation mittels eines gitterbasierten dreidimensionalen zellulären Automaten durchgeführt werden.

Die Beschränkung auf diskrete Bewegungen von Gitterzelle zu Gitterzelle, die Beschränkung auf diskrete Bewegungsrichtungen und/oder die Verwendung eines zellulären Automaten vereinfacht die Simulation in der Regel beträchtlich und führt meist zu einer erheblichen Reduzierung eines erforderlichen Rechenaufwands. Tatsächlich erweist sich, dass ein Rechenaufwand in vielen Fällen um mindestens eine Größenordnung verringert werden kann.

Nach einer weiteren vorteilhaften Ausführungsform der Erfindung können von einer Gitterzelle in benachbarte Gitterzellen führende Richtungen in das diskrete Raster der räumlichen Orientierungen aufgenommen werden. Für diese Richtungen können Werkstoffbewegungen in vielen Fällen bereits durch einfache Simulationsmodelle hinreichend genau und mit geringem Rechenaufwand simuliert werden.

Vorzugsweise kann das diskrete Raster durch räumliche Orientierungen gebildet wird, deren Winkelwerte im Wesentlichen in 45°-Schritten diskretisiert sind.

Weiterhin kann eine Gitterzelle ermittelt werden, die mit mehr virtuellem Werkstoff gefüllt ist als eine ihr benachbarte Gitterzelle. Damit kann eine von der ermittelten Gitterzelle in die benachbarte Gitterzelle führende Richtung in die zeitliche Abfolge der Orientierungen aufgenommen werden.

Nach einer vorteilhaften Weiterbildung der Erfindung kann für eine jeweilige Orientierung der ermittelten zeitlichen Abfolge jeweils eine Werkstoffbewegung sensorisch detektiert werden. Infolge einer Detektion eines Abflauens der Werkstoffbewegung kann dann ein Auslösesignal generiert werden, durch das ein Rotieren des Bauteils in eine nachfolgende Orientierung der zeitlichen Abfolge veranlasst wird. Insbesondere kann das Auslösesignal dabei vorrangig vor dem simulierten Ausschüttvorgang berücksichtigt werden. Durch das vorrangig ausgelöste Rotieren in die nachfolgende Orientierung können Verzögerungen vermieden werden, die auf einer simulationsbedingten Überschätzung der Ausschüttdauer basieren.

Ein Ausführungsbeispiel der Erfindung wird nachfolgend anhand der Zeichnung näher erläutert. Dabei veranschaulichen jeweils in schematischer Darstellung:
- Figur 1: eine erfindungsgemäße Anordnung,
- Figur 2: eine Simulation eines Ausschüttvorgangs,
- Figur 3: ein diskretes Raster von in benachbarte Gitterzellen führenden Richtungen und
- Figur 4: ein Ablaufdiagramm eines erfindungsgemäßen Verfahrens
Insofern in den Figuren die gleichen oder korrespondierende Bezugszeichen verwendet werden, werden hierdurch die gleichen oder korrespondierende Entitäten bezeichnet, die vorzugsweise wie im Zusammenhang mit den betreffenden Figuren beschrieben, implementiert oder realisiert sind.

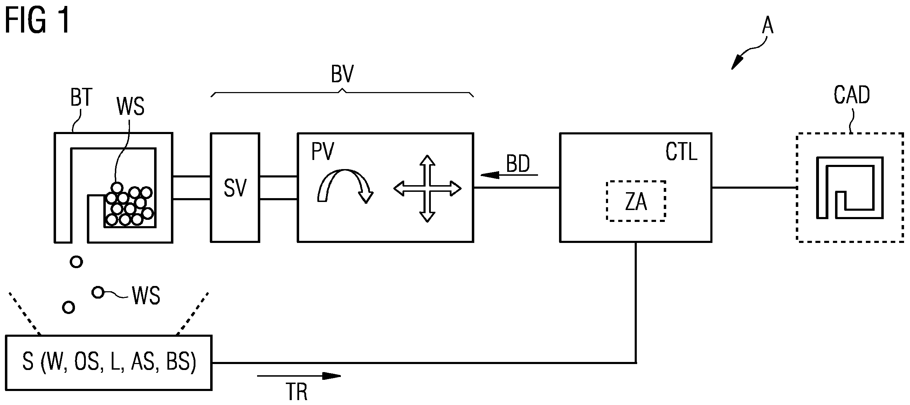

Figur 1 zeigt in schematischer Darstellung eine erfindungsgemäße Anordnung A zum Separieren überschüssigen Werkstoffs WS von einem additiv, d.h. mittels eines additiven Fertigungsverfahrens hergestellten Bauteil BT. Das Bauteil BT ist vorzugsweise durch einen 3D-Drucker im Pulverbettverfahren hergestellt, bei dem, wie einleitend dargestellt, einzelne Partikel eines pulverförmigen oder fluiden Werkstoffs Schicht für Schicht miteinander verbunden werden. Der bei der additiven Fertigung nicht verbundene und damit überschüssige Werkstoff WS ist entsprechend zu entfernen. Figur 1 zeigt das Bauteil BT nach Beendigung des schichtweisen Fertigungsprozesses, aber noch vor Entfernung des überschüssigen, nicht verbundenen Werkstoffs WS.

Die Anordnung A weist eine Schwingungsvorrichtung SV, eine Positioniervorrichtung PV, eine Steuerung CTL sowie eine Sensorik S auf.

Das Bauteil BT ist mit der Schwingungsvorrichtung SV mechanisch gekoppelt, die wiederum mit der Positioniervorrichtung PV mechanisch gekoppelt ist. Die Positioniervorrichtung PV, die vorzugsweise als Roboterarm ausgebildet ist, dient dazu, das Bauteil BT in unterschiedliche Posen zu versetzen. Eine Pose bezeichnet eine räumliche Lage des Bauteils und umfasst dessen Position und räumliche Orientierung oder Ausrichtung. Durch die Positioniervorrichtung PV kann das Bauteil also in unterschiedliche Positionen und räumliche Orientierungen bewegt bzw. rotiert werden. Erfindungsgemäß werden dabei die räumlichen Orientierungen in die das Bauteil T durch die Positioniervorrichtung PV gebracht wird, auf ein diskretes Raster von wenigen Richtungen beschränkt. Vorteilhafterweise wird das diskrete Richtungsraster durch räumliche Orientierungen gebildet, deren Winkelwerte im Wesentlichen in 45°-Schritten diskretisiert sind.

Die Schwingungsvorrichtung SV dient dazu, das Bauteil BT in mechanische Schwingungen zu versetzen. Eine Amplitude, Frequenz und/oder Schwingungsrichtung der mechanischen Schwingungen ist hierbei vorzugsweise variierbar. Die Positioniervorrichtung PV kann das Bauteil BT gemeinsam mit der Schwingungsvorrichtung SV um eine oder mehrere Rotationsachsen rotieren und translatorisch verfahren. Vorzugsweise kann das Bauteil BT durch eine als Roboterarm ausgebildete Positioniervorrichtung PV einer 3D-Fertigungsumgebung, wie beispielsweise einem 3D-Drucker entnommen und an der Schwingungsvorrichtung SV fixiert werden. Die Positioniervorrichtung PV und die Schwingungsvorrichtung SV sind Teil einer Bewegungsvorrichtung BV zum Bewegen des Bauteils BT.

Die Sensorik S, die Positioniervorrichtung PV, die Schwingungsvorrichtung SV bzw. die Bewegungsvorrichtung BV sind mit der Steuerung CTL gekoppelt. Die Steuerung CTL dient zum Steuern der Bewegungsvorrichtung BV, d.h. zum Steuern der Positionierung und Ausrichtung des Bauteils BT durch die Positioniervorrichtung PV sowie zum Steuern der durch die Schwingungsvorrichtung SV zu bewirkenden Schwingungen.

Die Bewegungsvorrichtung BV wird insbesondere so gesteuert, dass das Bauteil BT nacheinander in verschiedene diskretisierte räumliche Orientierungen rotiert wird, in denen der überschüssige Werkstoff WS möglichst schnell und/oder vollständig ausgeschüttet wird. Idealerweise soll hierbei ein für das Ausschütten des überschüssigen Werkstoffs WS, d.h. für eine Entleerung des Bauteils kumulativ benötigter Zeitbedarf minimiert werden.

Diese Minimierung erfolgt anhand einer Simulation eines oder mehrerer Ausschüttvorgänge. Dabei wird für unterschiedliche Ausschüttposen, d.h. insbesondere diskretisierte räumliche Orientierungen des Bauteils BT, simulativ ein für das Ausschütten benötigter Zeitbedarf ermittelt. Der kumulierte Zeitbedarf wird dann mittels eines Optimierungsverfahrens minimiert. Dabei wird gezielt eine zeitliche Abfolge von Ausschüttposen ermittelt, die zu einer möglichst kurzen Entleerungszeit führt. Für derartige Optimierungen steht eine Vielzahl von Standard-Optimierungsverfahren zur Verfügung.

Die Simulation wird anhand eines volumetrischen Modells CAD des Bauteils BT mittels eines dreidimensionalen zellulären Automaten ZA der Steuerung CTL ausgeführt. Das volumetrische Modell CAD wird dabei durch räumlich aufgelöste Strukturdaten des Bauteils BT dargestellt, die zur Steuerung CTL übermittelt werden. Anhand dieser Simulation ermittelt die Steuerung CTL geeignete Bewegungsdaten BD zum Ansteuern der Positioniervorrichtung PV und der Schwingungsvorrichtung SV bzw. der Bewegungsvorrichtung BV. Durch die Bewegungsdaten BD werden vom Bauteil BT einzunehmende räumliche Orientierungen und Positionen sowie Frequenz, Amplitude und/oder Schwingungsrichtungen von Schwingungen quantifiziert. Eine jeweilige Ausschüttpose des Bauteils BT kann vorzugsweise durch eine Positionsangabe, die eine Position des Bauteils BT quantifiziert, zusammen mit diskretisierten Winkelangaben, die eine räumliche Orientierung des Bauteils BT quantifizieren, spezifiziert werden. Als Winkelangaben können insbesondere Eulerwinkel verwendet werden.

Die Bewegungsvorrichtung BV empfängt die Bewegungsdaten BD von der Steuerung CTL und wird durch die Bewegungsdaten BD gesteuert. Auf diese Weise wird die Positioniervorrichtung PV dazu veranlasst, das Bauteil BT in eine Ausschüttpose zu bewegen, in der der überschüssige Werkstoff WS möglichst schnell und effektiv ausgeschüttet wird. Darüber hinaus wird die Schwingungsvorrichtung SV dazu veranlasst, das Bauteil BT derart in mechanische Schwingungen zu versetzen, dass der Ausschüttvorgang nach Möglichkeit beschleunigt wird. Der Werkstoff WS wird hierbei gewissermaßen aus dem Bauteil BT herausgeschüttelt.

Ein während des Ausschüttvorgangs ausgeschütteter oder aus dem Bauteil BT fallender Werkstoff WS wird durch die Sensorik S detektiert. Die Sensorik S dient insbesondere dazu, eine durch den Ausschüttvorgang bedingte Bewegung des Werkstoffs WS und speziell ein Abflauen dieser Bewegung zu detektieren. Zu diesem Zweck kann die Sensorik S unterschiedliche Sensoren aufweisen. So kann insbesondere eine Waage W vorgesehen sein, durch die der aus dem Bauteil BT ausgeschüttete Werkstoff WS fortlaufend gewogen wird. Anstelle oder zusätzlich zur Waage W kann auch ein anderer Mengensensor zur Erfassung des ausgeschütteten Werkstoffs WS vorgesehen sein. Weiterhin kann zur Detektion des ausgeschütteten Werkstoffs WS ein optischer Sensor OS, beispielsweise eine Kamera oder eine Lichtschranke, verwendet werden, vorzugsweise zusammen mit einem Laser L zur Beleuchtung des ausgeschütteten Werkstoffs WS. Ferner können Geräusche des aus dem Bauteil BT fallendem Werkstoffs WS oder des sich im Bauteil BT bewegenden Werkstoffs WS mittels eines akustischen Sensors AS detektiert werden. Darüber hinaus können Bewegungen des Werkstoffs WS innerhalb des Bauteils BT mittels eines Bewegungssensors BS, z.B. mittels eines Laserinterferometers oder eines sog. MEMS (MicroElectro-Mechanical System) detektiert werden.

Sobald mittels der Sensorik S festgestellt wird, dass keine merkliche Werkstoffbewegung mehr stattfindet, kann in der Regel davon ausgegangen werden, dass auch die Bewegungen des Werkstoff WS im Inneren des Bauteils BT abgeklungen sind. Sobald dieser Zustand eintritt, kommen die Entleerung des Bauteils und auch eventuelle Umschüttvorgänge im Inneren des Bauteils BT für die aktuelle Pose zum Erliegen. Insofern viele Simulationen die Dauer von Ausschüttvorgängen überschätzen, erweist es sich als sehr vorteilhaft, das Bauteil unmittelbar nach der Detektion des Abflauens der Werkstoffbewegung in die nächste Ausschüttpose zu bringen, ohne eine durch die Simulation ermittelte Zeitdauer abzuwarten.

Dementsprechend wird von der Sensorik S infolge der Detektion des Abflauens der Werkstoffbewegung ein Auslösesignal TR generiert und zur Steuerung CTL übermittelt. Das Auslösesignal TR kann insbesondere dann generiert werden, sobald ein durch die Waage W gemessenes Gewicht des ausgeschütteten Werkstoffs WS zumindest näherungsweise stationär bleibt, d.h. sich nicht mehr oder nicht mehr wesentlich ändert. Im Falle der anderen Sensoren OS, AS und BS kann das Auslösesignal TR generiert werden, sobald ein Detektionsergebnis einen vorgegebenen Schwellwert unterschreitet.

Infolge des Empfangs des Auslösesignals TR wird die Bewegungsvorrichtung BV durch die Steuerung CTL dazu veranlasst, das Bauteil BT in die nächste Ausschüttpose zu bewegen.

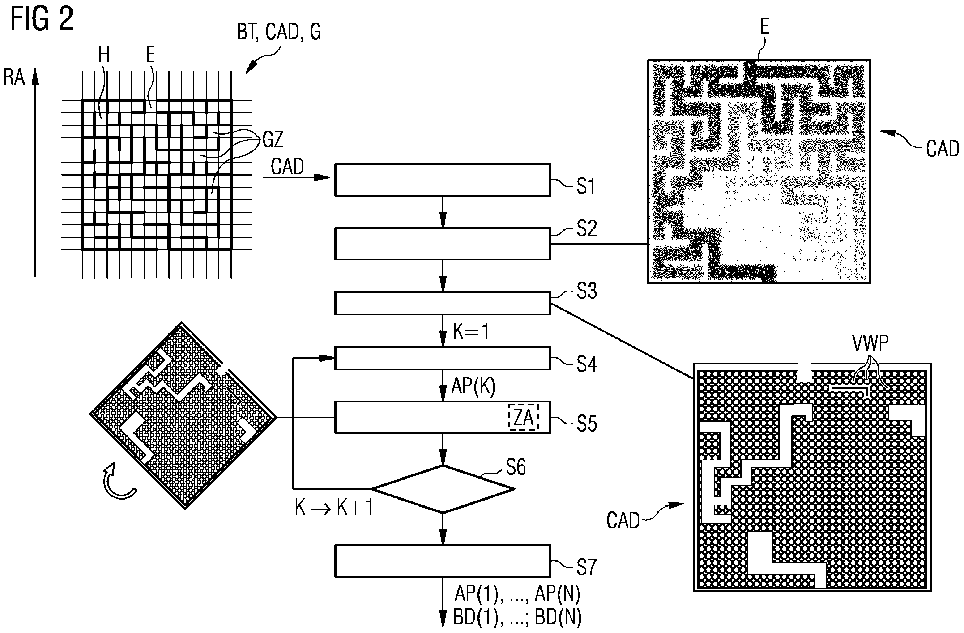

Figur 2 veranschaulicht eine Simulation eines Ausschüttvorgangs von überschüssigem Werkstoff WS aus dem Bauteil BT.

Zur Simulation des Ausschüttvorgangs werden Verfahrensschritte S1 bis S7 vorzugsweise durch die Steuerung CTL ausgeführt.

In Verfahrensschritt S1 wird ein volumetrisches Modell CAD des Bauteils BT in Form von räumlich aufgelösten Strukturdaten des Bauteils BT von der Steuerung CTL eingelesen. Das volumetrische Modell CAD kann insbesondere als sogenanntes CAD-Modell (CAD: Computer Aided Design) vorliegen. Anhand des volumetrischen Modells CAD wird ein Hohlraum H des Bauteils BT ermittelt, der nach der additiven Fertigung des Bauteils BT mit überschüssigem Werkstoff WS gefüllt ist und über eine Öffnung E des Bauteils BT zu entleeren ist.

Zur Simulation des Ausschüttvorgangs wird das Bauteil BT und insbesondere dessen Hohlraum H anhand der Strukturdaten CAD durch ein virtuelles räumliches, d.h. dreidimensionales Gitter G in eine Vielzahl von Gitterzellen GZ eingeteilt. Aus Übersichtlichkeitsgründen sind in Figur 2 nur wenige dieser Gitterzellen GZ mit einem Bezugszeichen versehen.

Das Gitter G wird im vorliegenden Ausführungsbeispiel durch orthogonale Basisvektoren aufgespannt, so dass die Gitterzellen GZ quaderförmig oder würfelförmig sind. Alternativ oder zusätzlich kann auch ein tetraederförmiges oder hexaederförmiges Gitter G vorgesehen sein. Die durch die Basisvektoren definierte Ausrichtung des Gitters G gegenüber dem Bauteil G wird durch eine Ausrichtungsangabe RA vorzugsweise bezüglich eines körperfesten Koordinatensystems des Bauteils BT spezifiziert. Die Ausrichtungsangabe RA kann dabei insbesondere einen oder mehrere der Basisvektoren umfassen.

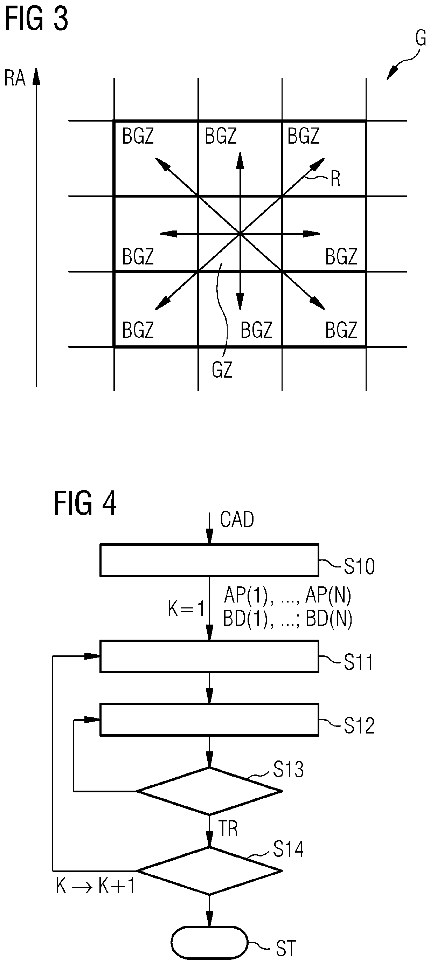

Anhand der Ausrichtungsangabe RA wird ein diskretes Raster R von räumlichen Orientierungen des Bauteils BT ermittelt. Das diskrete Raster R wird durch Figur 3 veranschaulicht. Im vorliegenden Ausführungsbeispiel orientiert sich das diskrete Raster R an den durch das Gitter G vorgegebenen Vorzugsrichtungen der Simulation. Bei Vorgabe eines das Bauteil BT diskretisierenden Gitters G können naturgemäß diejenigen Werkstoffbewegungen im Bauteil BT besonders gut und/oder besonders einfach simuliert werden, die von einer Gitterzelle GZ in eine benachbarte Gitterzelle BGZ führen. Bewegungen in andere Richtungen müssten dagegen zellenübergreifend approximiert oder durch eine feinere Simulation von Werkstoffbewegungen innerhalb einer Gitterzelle behandelt werden. Dies würde jedoch den erforderlichen Rechenaufwand beträchtlich erhöhen.

Mithin wird das diskrete Raster R genau durch die von einer Gitterzelle GZ in eine benachbarte Gitterzelle BGZ führenden Richtungen gebildet bzw. auf diese Richtungen beschränkt. Im Falle eines zweidimensionalen Gitters ist eine jeweilige (innere) Gitterzelle GZ von acht benachbarten Gitterzellen BGZ umgeben. In einem solchen Fall bestünde das Raster R aus denjenigen diskreten Richtungen, die gegenüber den Basisvektoren des zweidimensionalen Gitters in 45°-Schritten geneigt sind. Im realen dreidimensionalen Fall ist eine jeweilige (innere) Gitterzelle GZ von 26 benachbarten Gitterzellen BGZ umgeben. Insofern eine Richtung im dreidimensionalen Gitter G durch zwei Winkelwerte spezifiziert werden kann, kann das diskrete Raster R im dreidimensionalen Fall aus denjenigen 26 Richtungen gebildet werden, deren Winkelwerte jeweils in 45°-Schritten gegenüber von jeweils zwei Basisvektoren des Gitters G aufgespannten Gitterebenen geneigt sind.

In dem weiteren in Figur 2 dargestellten Verfahrensschritt S2 werden anhand des volumetrischen Modells CAD für eine jeweilige Gitterzelle GZ jeweils eine Weglänge eines im Hohlraum H verlaufenden Wegs zur Öffnung E ermittelt. Die jeweiligen Weglängen sind im rechten oberen Teil von Figur 2 schattiert dargestellt, wobei dunklere Bereiche näher an der Öffnung E angeordnet sind als hellere Bereiche. Vorteilhafterweise können die Weglängen mit Hilfe eines sogenanntes Fast-Marching-Verfahrens ermittelt werden, durch das für jede Gitterzelle GZ jeweils ein kürzester Weg von dieser Gitterzelle zur Öffnung E ermittelt wird

Weiterhin wird für eine jeweilige Gitterzelle GZ aus dem diskreten Raster R eine jeweilige lokale Schüttrichtung selektiert oder ermittelt, die von der Gitterzelle GZ in diejenige der benachbarten Gitterzellen BGZ führt, die die kürzeste lokale Weglänge zur Öffnung E aufweist. Die jeweils ermittelte Schüttrichtung sowie die jeweils ermittelte kürzeste lokale Weglänge werden der jeweiligen Gitterzelle GZ zugeordnet.

Im Verfahrensschritt S3 wird der Hohlraum H anhand des volumetrischen Modells CAD simulativ mit virtuellen Werkstoffpartikeln VWP vollständig oder teilweise gefüllt. Hierbei kann ein virtueller Werkstoffpartikel VWP in einer Simulation stellvertretend für eine Vielzahl realer Werkstoffpartikel stehen. Bei Verwendung anderer Simulationen kann eine Füllung mit virtuellem Werkstoff entsprechend anders realisiert werden.

Weiterhin wird ein Zähler K für eine zu ermittelnde zeitliche Abfolge von Ausschüttposen AP(K) zu K=1 initialisiert. Wie oben bereits ausgeführt, spezifiziert eine derartige Ausschüttpose AP(K) jeweils eine diskretisierte räumliche Orientierung sowie eine Position des Bauteils BT.

Im Verfahrensschritt S4 wird eine für einen aktuellen Füllzustand des Bauteils BT mit virtuellen Werkstoffpartikeln VWP vorteilhafte Ausschüttpose AP(K) sowie eine geeignete Schwingung des Bauteils BT ermittelt. Die Wahl der aktuellen Ausschüttpose AP(K) bestimmt den Entleerungsprozess, bei dem die Schwerkraft eine treibende Kraft ist und durch das Schütteln des Bauteils BT unterstützt wird. Die Wahl der Ausschüttpose AP(K) basiert auf einer Analyse des aktuellen Füllzustandes des Bauteils BT sowie der ermittelten Weglängen und lokalen Schüttrichtungen. Die Ausschüttpose AP(K) umfasst hierbei insbesondere eine Orientierung sowie eine Position des Bauteils BT.

Um eine vorteilhafte Ausschüttpose AP(K) zu ermitteln, wird eine Gitterzelle GZ gesucht, die aktuell mit mehr virtuellen Werkstoffpartikeln VWP gefüllt ist als eine benachbarte Gitterzelle BGZ, und der eine kurze, insbesondere möglichst kurze Weglänge zur Öffnung E zugeordnet ist. Gegebenenfalls kann für eine jeweilige Gitterzelle GZ ein Schüttparameter ermittelt werden, in dem eine aktuell darin enthaltene Menge an virtuellen Werkstoffpartikeln VWP mit der zugeordneten Weglänge, z.B. in Form einer gewichteten Summe verrechnet wird. Vorzugsweise wird ein solcher Schüttparameter durch eine kürzere Weglänge sowie durch eine größere Anzahl von aktuell enthaltenen virtuellen Werkstoffpartikeln VWP erhöht und andernfalls verringert. In diesem Fall kann aus den Gitterzellen GZ eine Gitterzelle selektiert werden, die den höchsten Schüttparameter aufweist.

Anschließend wird eine der gefundenen oder selektierten Gitterzelle zugeordnete lokale Schüttrichtung als globale Schüttrichtung ausgewählt. Anhand der ausgewählten Schüttrichtung wird eine Ausschüttpose AP(K) festgelegt, durch die das Bauteil BT so orientiert würde, dass die globale Schüttrichtung in Schwerkraftrichtung nach unten weist. Insofern die lokalen Schüttrichtungen auf das diskrete Raster R beschränkt sind, gilt dies auch für die durch die Ausschüttpose AP(K) spezifizierte Orientierung.

Weiterhin werden Bewegungsdaten bestimmt, die die ermittelte Ausschüttpose AP(K) quantifizieren. Darüber hinaus werden weitere Bewegungsdaten ermittelt, durch die das Bauteil BT in den Ausschüttvorgang beschleunigende Schwingungen versetzt würde. Die weiteren Bewegungsdaten können insbesondere Amplitude, Frequenz sowie Schwingungsrichtung dieser Schwingungen spezifizieren. Die ermittelten Bewegungsdaten werden in einem Datensatz BD(K) zusammengefasst, die eine spezifische Bewegung für das Bauteil BT quantifizieren.

Im Verfahrensschritt S5 wird der durch diese Bewegung spezifisch induzierte Ausschüttvorgang von virtuellen Werkstoffpartikeln VWP aus der Öffnung E des Bauteils BT physikalisch simuliert. Die Simulation wird mittels eines dreidimensionalen zellulären Automaten ZA anhand des volumetrischen Modells CAD durchgeführt. Durch den zellulären Automaten werden pro Bewegungsschritt der Simulation nur diskrete Bewegungen von Werkstoffpartikeln VWP von einer jeweiligen Gitterzelle GZ in eine dieser benachbarte Gitterzelle BGZ berücksichtigt bzw. simuliert. Durch diese Vereinfachung kann ein erforderlicher Rechenaufwand in der Regel erheblich reduziert werden. Entsprechend wird die Bewegungsrichtung der Werkstoffpartikel VWP pro Bewegungsschritt der Simulation auf von einer jeweiligen Gitterzelle GZ in eine benachbarte Gitterzelle BGZ führende Richtungen, d.h. auf das diskrete Raster R beschränkt.

Im Rahmen der Simulation wird das Bauteil BT virtuell in die im Verfahrensschritt S4 ermittelte Ausschüttpose AP(K) gebracht und in Schwingungen versetzt. Insbesondere wird hierbei eine bewegungsbedingte Verteilung der virtuellen Werkstoffpartikel VWP im Bauteil BT simuliert. Wie oben bereits erwähnt, wird der Ausschüttvorgang durch die Schwerkraft angetrieben und durch die Schwingungen unterstützt.

Als Ergebnis der Simulation der spezifischen Bewegung des Bauteils BT, d.h. des spezifischen Ausschüttvorgangs in der Ausschüttpose AP(K) wird ein hieraus resultierender zeitlicher Verlauf einer Verteilung der virtuellen Werkstoffpartikel VWP im Bauteil BT ermittelt. Die aktuelle Ausschüttpose AP(K) sowie der resultierende Verlauf der Verteilung der virtuellen Werkstoffpartikel VWP werden der jeweiligen Bewegung des Bauteils BT zugeordnet.

Im Verfahrensschritt S6 wird geprüft, ob der Hohlraum H virtuell entleert ist. Hierzu kann ein Zielwert für die Entleerung vorgegeben sein, z.B. ein Restfüllgrad, bei dessen Unterschreitung das Bauteil BT als entleert oder gebrauchsfertig gilt. Sofern der Hohlraum H nicht entleert ist, wird der Zähler K inkrementiert, und es erfolgt ein Rücksprung zum Verfahrensschritt S4, in dem die nächste Ausschüttpose AP(K+1) ermittelt wird. Andernfalls wird der Verfahrensschritt S7 ausgeführt.

Im Verfahrensschritt S7 werden die Simulationsergebnisse dokumentiert und eine darauf basierende Steuerdatei generiert. Die Steuerdatei enthält eine zeitliche Abfolge der ermittelten Ausschüttposen AP(1),..., AP(N), zugehörige Bewegungsdaten BD(1),..., BD(N) zum Ansteuern der Bewegungsvorrichtung BV sowie weitere Simulationsergebnisse. Im vorliegenden Ausführungsbeispiel enthält die Steuerdatei für eine K-te simulierte Bewegung des Bauteils BT die zugehörige Ausschüttpose AP(K), die die Bewegung spezifizierenden Bewegungsdaten BD(K) sowie den aus der Bewegung resultierenden Verlauf der Verteilung der virtuellen Werkstoffpartikel VWP im Bauteil BT.

Figur 4 zeigt ein Ablaufdiagramm eines erfindungsgemäßen Verfahrens zum Separieren von überschüssigem Werkstoff WS vom Bauteil BT.

In einem initialen Verfahrensschritt S10 wird anhand des volumetrischen Modells CAD ein Ausschüttvorgang, wie im Zusammenhang mit Figur 2 beschrieben, durch die Verfahrensschritte S1 bis S7 simuliert. Als Ergebnis der Simulation wird, wie oben beschrieben, eine Steuerdatei generiert, die die zeitliche Abfolge der ermittelten Ausschüttposen AP(1),..., AP(N), die zugehörigen Bewegungsdaten BD(1),..., BD(N) zum Ansteuern der Bewegungsvorrichtung BV sowie für eine jeweilige Ausschüttpose AP(K) den daraus resultierenden zeitlichen Verlauf der Verteilung der virtuellen Werkstoffpartikel VWP im Bauteil BT enthält. Die Simulation kann vorzugsweise vorab oder offline durchgeführt werden.

Vor Ausführung eines nächsten Verfahrensschritts S11 wird der Zähler K für die Ausschüttposen zu K=1 initialisiert.

Im Verfahrensschritt S11 wird die Bewegungsvorrichtung BV anhand der Bewegungsdaten BD(K) dazu veranlasst, das Bauteil BT in die hinsichtlich seiner Orientierung diskretisierte Ausschüttpose AP(K) zu bewegen und in Schwingungen zu versetzen. Die Bewegung des Bauteils BT bzw. deren zeitlicher Verlauf orientiert sich hierbei am zeitlichen Verlauf der simulierten Werkstoffverteilung.

In einem weiteren Verfahrensschritt S12 wird der in der Ausschüttpose AP(K) aus dem Bauteil BT ausgeschüttete Werkstoff WS - wie im Zusammenhang mit Figur 1 erläutert - durch die Sensorik S fortlaufend detektiert. Hierbei wird insbesondere eine Bewegung des ausgeschütteten Werkstoffs WS detektiert.

In einem darauf bezogenen Verfahrensschritt S13 wird geprüft, ob die detektierte Werkstoffbewegung abflaut, d.h. signifikant schwächer wird oder zum Erliegen kommt. Sobald festgestellt wird, dass keine merkliche Werkstoffbewegung mehr stattfindet, wird - wie im Zusammenhang mit Figur 1 beschrieben - ein Auslösesignal TR generiert und zur Steuerung CTL übertragen. Durch das Auslösesignal TR wird die Steuerung CTL dazu veranlasst, eine Entleerungsprüfung S14 vorzunehmen und ggf. zum Verfahrensschritt S11 zurückzuspringen. Falls kein Abflauen der Werkstoffbewegung detektiert wird, erfolgt dagegen ein Rücksprung zum Verfahrensschritt S12.

Im Rahmen der Entleerungsprüfung S14 wird geprüft, ob das Bauteil BT bereits entleert ist. Diese Prüfung kann insbesondere dadurch erfolgen, dass ein Gewicht des ausgeschütteten Werkstoffs WS mit einem Gewicht des ursprünglich im Bauteil BT befindlichen Werkstoffs WS verglichen wird. Letzteres kann z.B. anhand des volumetrischen Modells CAD ermittelt werden.

Falls die Prüfung ergibt, dass das Bauteil BT entleert ist, wird die erfindungsgemäße Separation erfolgreich beendet und gelangt in einen Zielzustand ST.

Falls die Prüfung dagegen ergibt, dass das Bauteil BT noch nicht entleert ist, wird der Zähler K inkrementiert, und es erfolgt ein Rücksprung zum Verfahrensschritt S11, in dem das Bauteil BT in die nächste Ausschüttpose AP(K+1) bewegt wird. Gegebenenfalls kann vor Beginn der Bewegung in die nächste Ausschüttpose AP(K) eine vorgegebene Zeitspanne gewartet werden, um sicherzustellen oder eine Wahrscheinlichkeit dafür zu erhöhen, dass auch eventuelle Restbewegungen des Werkstoffs WS im Innern des Bauteils BT zum Erliegen kommen.

Wie oben bereits erwähnt, wird der Rücksprung zum Verfahrensschritt S11 durch das Auslösesignal TR veranlasst. Dabei wird das Auslösesignal TR vorrangig vor dem zeitlichen Verlauf der simulierten Werkstoffverteilung berücksichtigt. Insbesondere wird nicht eine durch die Simulation ermittelte Zeitdauer bis zum Abklingen der Werkstoffbewegung in der Ausschüttpose AP(K) abgewartet, sondern es wird auf das tatsächlich gemessene Abflauen der Werkstoffbewegung abgestellt. D.h. in Abweichung von der simulationsgetriebenen Ansteuerung der Bewegungsvorrichtung BV durch die Steuerung CTL wird die Bewegung in die nächste Ausschüttpose AP(K+1) veranlasst, sobald mittels der Sensorik S festgestellt wird, dass keine merkliche Werkstoffbewegung mehr stattfindet. Insofern die Abklingzeit durch Simulationen häufig überschätzt wird, kann so der Auschüttvorgang in der Regel erheblich beschleunigt werden.

Durch die erfindungsgemäße Beschränkung auf ein diskretes Raster von wenigen räumlichen Orientierungen des Bauteils BT kann ein für die Simulation erforderlicher Rechenaufwand in der Regel erheblich reduziert werden. Dies gilt insbesondere, da dieses Raster spezifisch auf das der Simulation zugrunde liegende Gitter G abgestimmt wird. Dabei erweist sich, dass die Simulation dann besonderes genau ist, wenn die realen Ausschüttrichtungen bzw. Orientierungen des Bauteils in diesem gitterinduzierten Raster liegen. Somit kann durch die Beschränkung der zum Entleeren des Bauteils BT einzunehmenden Ausschüttposen auf das gleiche Raster auch eine hohe Simulationsgenauigkeit gewährleistet werden.

## Patentansprüche

1. Verfahren zum Separieren überschüssigen Werkstoffs (WS) von einem additiv hergestellten Bauteil (BT), wobei
a) räumlich aufgelöste Strukturdaten (CAD) des Bauteils (BT) empfangen werden,
b) anhand der Strukturdaten (CAD) ein Hohlraum (H) des Bauteils (BT) durch ein virtuelles räumliches Gitter (G) in Gitterzellen (GZ) eingeteilt wird, wobei eine räumliche Ausrichtung des Gitters (G) relativ zum Bauteil (BT) durch eine Ausrichtungsangabe (RA) spezifiziert wird,
c) anhand der Ausrichtungsangabe (RA) ein diskretes Raster (R) von räumlichen Orientierungen des Bauteils (BT) ermittelt wird,
d) die Gitterzellen (GZ) des Hohlraums (H) simulativ mit virtuellem Werkstoff (VWP) gefüllt werden,
e) anhand der Strukturdaten (CAD) ein Ausschüttvorgang des virtuellen Werkstoffs (VWP) aus dem Bauteil (BT) für auf das diskrete Raster (R) beschränkte räumliche Orientierungen simuliert wird, wobei eine zeitliche Abfolge von auf das diskrete Raster (R) beschränkten Orientierungen (AP(1),..., AP(N)) ermittelt wird, und
f) das Bauteil (BT) abhängig vom simulierten Ausschüttvorgang sukzessive in die Orientierungen (AP(1),..., AP(N)) der zeitlichen Abfolge rotiert wird.

2. Verfahren nach Anspruch 1, **dadurch gekennzeichnet, dass** das Bauteil (BT) durch eine Bewegungsvorrichtung (BV) in die Orientierungen (AP(1),..., AP(N)) der zeitlichen Abfolge rotiert und/oder in mechanische Schwingungen versetzt wird.

3. Verfahren nach einem der vorhergehenden Ansprüche, **dadurch gekennzeichnet, dass** ein jeweiliger Bewegungsschritt der Simulation auf diskrete Bewegungen des virtuellen Werkstoffs (VWP) von einer jeweiligen Gitterzelle (GZ) in eine dieser benachbarte Gitterzelle (BGZ) beschränkt ist.

4. Verfahren nach einem der vorhergehenden Ansprüche, **dadurch gekennzeichnet, dass** eine Bewegungsrichtung des virtuellen Werkstoffs (VWP) in der Simulation auf von einer jeweiligen Gitterzelle (GZ) in eine dieser benachbarte Gitterzelle (BGZ) führende Richtungen beschränkt ist.

5. Verfahren nach einem der vorhergehenden Ansprüche, **dadurch gekennzeichnet, dass** die Simulation mittels eines gitterbasierten dreidimensionalen zellulären Automaten (ZA) durchgeführt wird.

6. Verfahren nach einem der vorhergehenden Ansprüche, **dadurch gekennzeichnet, dass** von einer Gitterzelle (GZ) in benachbarte Gitterzellen (BGZ) führende Richtungen in das diskrete Raster der räumlichen Orientierungen aufgenommen werden.

7. Verfahren nach einem der vorhergehenden Ansprüche, **dadurch gekennzeichnet, dass** das diskrete Raster durch räumliche Orientierungen gebildet wird, deren Winkelwerte im Wesentlichen in 45°-Schritten diskretisiert sind.

8. Verfahren nach einem der vorhergehenden Ansprüche, **dadurch gekennzeichnet, dass** eine Gitterzelle (GZ) ermittelt wird, die mit mehr virtuellem Werkstoff (VWP) gefüllt ist als eine ihr benachbarte Gitterzelle (BGZ), und
dass eine von der ermittelten Gitterzelle (GZ) in die benachbarte Gitterzelle (BGZ) führende Richtung in die zeitliche Abfolge der Orientierungen (AP(1),..., AP(N)) aufgenommen wird.

9. Verfahren nach einem der vorhergehenden Ansprüche, **dadurch gekennzeichnet, dass** für eine jeweilige Orientierung (AP(K)) der ermittelten zeitlichen Abfolge:
- eine Werkstoffbewegung sensorisch detektiert wird,
- infolge einer Detektion eines Abflauens der Werkstoffbewegung ein Auslösesignal (TR) generiert wird, und
- durch das Auslösesignal (TR) ein Rotieren des Bauteils (BT) in eine nachfolgende Orientierung (AP(K+1)) der zeitlichen Abfolge veranlasst wird.

10. Anordnung (A) zum Separieren eines Werkstoffs (WS) von einem additiv hergestellten Bauteil (BT), eingerichtet zum Ausführen eines Verfahrens nach einem der vorhergehenden Ansprüche.

11. Computerprogrammprodukt eingerichtet zum Ausführen eines Verfahrens nach einem der Ansprüche 1 bis 9.

12. Computerlesbares Speichermedium mit einem Computerprogrammprodukt nach Anspruch 11.
